(19) Europäisches Patentamt

European Patent Office

Office européen des brevets

(11) **EP 0 792 760 B1**

(12) **EUROPÄISCHE PATENTSCHRIFT**

(45) Veröffentlichungstag und Bekanntmachung des Hinweises auf die Patenterteilung:
**22.01.2003 Patentblatt 2003/04**

(51) Int Cl.⁷: **B60C 23/04**, B60C 23/20

(21) Anmeldenummer: **96116840.8**

(22) Anmeldetag: **19.10.1996**

(54) **Einrichtung zur Reifendruck-Überwachung**

Apparatus for tyre pressure control

Appareil de contrôle de pression pneumatique

(84) Benannte Vertragsstaaten:
**DE FR IT**

(30) Priorität: **07.12.1995 DE 19545618**

(43) Veröffentlichungstag der Anmeldung:
**03.09.1997 Patentblatt 1997/36**

(73) Patentinhaber: **WABCO GmbH & Co. OHG**
**30453 Hannover (DE)**

(72) Erfinder: **Singbartl, Günther**
**30161 Hannover (DE)**

(74) Vertreter: **Schrödter, Manfred, Dipl.-Ing.**
**WABCO GmbH & Co. OHG**
**Postfach 91 12 62**
**30432 Hannover (DE)**

(56) Entgegenhaltungen:
**EP-A- 0 423 462**      **DE-A- 2 300 346**

## Beschreibung

Die Erfindung betrifft eine Einrichtung zur Reifendruck-Überwachung gemäß dem Oberbegriff des Patentanspruchs 1.

Eine derartige Einrichtung ist aus der EP-A-0 418 495 bekannt. Bei dieser Einrichtung ist eine Druckmeßdose als Druckmeßglied vorgesehen, welche gleichzeitig als Korrekturglied dient.

Die Länge der Druckmeßdose entspricht dem Druck im Reifen, wobei die Temperatur der Reifenluft die Messung nicht verfälscht, da die Druckmeßdose der Umgebungstemperatur ausgesetzt ist, und damit das Referenzvolumen innerhalb der Druckmeßdose ebenfalls die Umgebungstemperatur annimmt.

Während der Fahrt erhöht sich die Temperatur der Reifenluft durch die Walkarbeit, womit sich der Reifendruck ebenfalls erhöht. Da mit dieser Druckerhöhung, sofern kein Leck auftritt, während der Fahrt eine Unterschreitung des Reifendruck-Grenzwertes vergleichsweise weniger wahrscheinlich ist als bei Fahrtantritt, sind die Kompensationsmaßnahmen der vorbekannten Einrichtung mit Vorrang auf die kritische Situation bei Fahrtantritt eingestellt. Nach einem Fahrzeugstillstand findet ein völliger Temperaturausgleich zwischen der Umgebungs- und der Reifenlufttemperatur statt. Da das Reifenvolumen konstant ist, stellt sich im Reifen ein Druck ein, der der isochoren Zustandsänderung der Reifenluft in Abhängigkeit von der Umgebungstemperatur entspricht: Der Reifendruck ergibt sich aus der Luftmasse im Reifen und der Umgebungstemperatur.

Die vorbekannte Einrichtung ist somit in der Lage, eine Unterschreitung des Reifendruck-Grenzwertes aufgrund einer zu geringen Reifen-Luftmasse anzuzeigen.

Die bekannte Einrichtung weist jedoch den Nachteil auf, daß sie die Füllvorschriften der Reifenhersteller nicht berücksichtigt.

Die Füllvorschrift der Reifenhersteller sagt aus, daß unabhängig von der Umgebungstemperatur eine Unterschreitung des vom Reifenhersteller angegebenen Fülldrucks anzuzeigen ist.

Bei der vorbekannten Einrichtung stellt sich bei sehr niederen Umgebungstemperaturen, wie z. B. bei -30 °C, ein kältebedingter Minderdruck ein, der nicht angezeigt wird. Aufgrund der vorstehend erläuterten Kompensationsmaßnahmen stellt sich als Länge der Druckmeßdose ein Wert ein, welcher ausschließlich ein Maß für die Luftmasse im Reifen darstellt; ein kältebedingter Minderdruck verändert dagegen nicht die Länge der Druckmeßdose.

Aus der EP-A-0 423 462 ist eine Einrichtung zur Überwachung der Dichtigkeit einer gasgefüllten Kammer bekannt. Diese Einrichtung verfügt über eine temperaturempfindliche Einrichtung, welche aus einem mit der Temperatur seine Ausdehnung verändernden Element gebildet ist, das zwischen einer Druckmeßeinrichtung und einem als Signalgeber dienenden Ventil angeordnet ist.

Die letztgenannte Überwachungs-Einrichtung erfaßt Druckschwankungen mit Mitteln, die vom Gasdruck unabhängig sind.

Die letztgenannte Überwachungs-Einrichtung weist jedoch den Nachteil auf, daß die temperaturempfindliche Einrichtung mit der Temperatur des im Fahrzeugreifen befindlichen Gases beaufschlagt wird.

Der Erfindung liegt deshalb die Aufgabe zugrunde, eine Einrichtung zur Reifendruck-Überwachung der eingangs genannten Art so zu verbessern, daß sie die Füllvorschriften des Reifen-Herstellers erfüllt.

Diese Aufgabe wird durch die im Patentanspruch 1 angegebene Erfindung gelöst. Weiterbildungen und vorteilhafte Ausführungsformen der Erfindung sind in den Unteransprüchen angegeben.

Die Erfindung hat den Vorteil, daß der Sicherheitsabstand zur Auslösung eines Warnsignals, welcher durch den Reifen-Anzeigedruck als Funktion von der Umgebungstemperatur vorgegeben wird, in unterschiedlichen Temperaturbereichen den jeweils unterschiedlichen Anforderungen in diesen Bereichen angepaßt ist.

Bezüglich einer kältebedingten Minderdruck-Anzeige besteht der Vorteil, daß eine Warnung an den Fahrer erfolgt, aber nur dann, wenn eine große Druckabweichung vorliegt, die aufgrund eines wirklich gravierenden Absinkens der Umgebungstemperatur zustande gekommen ist.

Ein weiterer Vorteil der Erfindung liegt darin, daß zumindest in den Bereichen der tiefen und mittleren Umgebungstemperaturen der Anzeigedruck mit gutem Abstand über einem kritischen Reifendruck liegt, wodurch eine Vorschädigung des Reifens, verursacht durch kältebedingten Minderdruck oder ein Reifenleck, ausgeschlossen ist.

Die Erfindung wird im folgenden anhand eines Ausführungsbeispiels, das in den Zeichnungen dargestellt ist, näher erläutert.

Dabei zeigen

Fig. 1     den Anzeigedruck der Reifendruck-Überwachungseinrichtung als Druckfunktion über der Umgebungstemperatur,

Fig. 2     eine elektromechanische Realisierung der Reifendruck-Überwachungseinrichtung mit ihren Komponenten.

Fig. 3     die Längenänderung eines als Dehnstoff-Arbeitselement ausgebildeten Distanzstücks in Abhängigkeit von der Umgebungstemperatur.

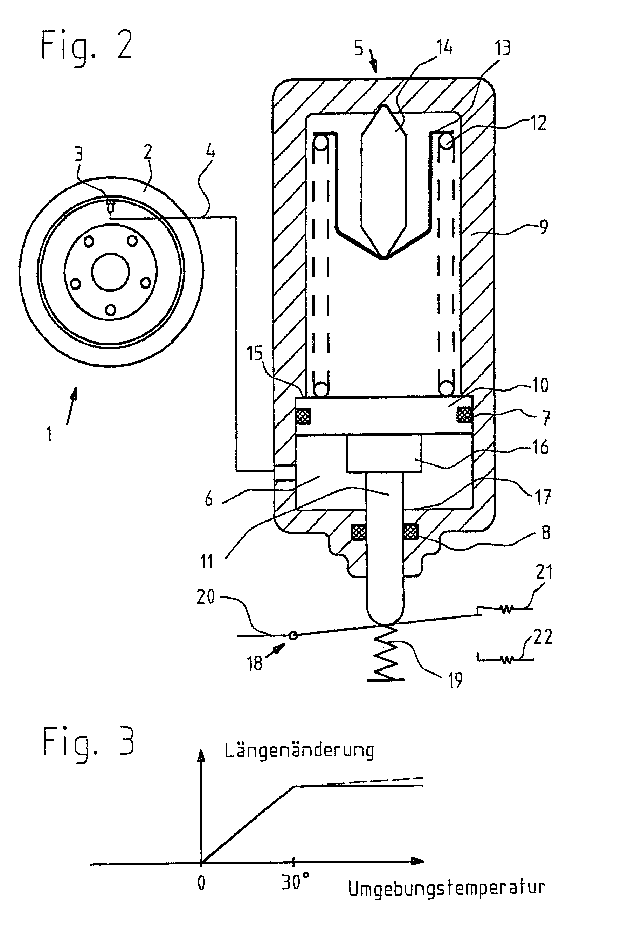

In Fig. 2 ist die Reifendruck-Überwachungseinrichtung dargestellt, die einem Reifen des Fahrzeugs zugeordnet ist. Ein schematisch dargestelltes Rad (1) des Fahrzeugs ist mit einem Reifen (2) ausgerüstet. Der Druck im Innern des Reifens (2) soll überwacht werden. Hierzu wird dieser Druck über eine Druckleitung (4) zu einer Reifendruck-Überwachungseinrichtung (5) übertragen. Die Druckleitung (4) führt von einem ersten Anschluß, der sich räumlich im Bereich eines dem Reifen (2) zugeordneten Füllventils (3) befindet, zu einem zweiten Anschluß in einer Druckkammer (6) der Reifendruck-Überwachungseinrichtung (5). Die Druckkammer (6) ist über Dichtungen (7, 8) gegen den außerhalb von Reifen (2) und Reifendruck-Überwachungseinrichtung (5) herrschenden Druck der Atmosphäre abgedichtet, so daß im Innern der Druckkammer (6) der gleiche Druck herrscht, wie er im Innern des Reifens (2) gegeben ist.

Die Reifendruck-Überwachungseinrichtung (5) ist räumlich entfernt vom Reifen (2) angeordnet und, da über die Druckleitung (4) nur eine vernachlässigbare Wärmeleitung zustandekommt, ist die Reifendruck-Überwachungs-Einrichtung (5) auch thermisch isoliert zum Innern des Reifens (2). Die Reifendruck-Überwachungseinrichtung (5) ist der Temperatur der Atmosphäre ausgesetzt und alle in ihr enthaltenen Komponenten nehmen die Umgebungstemperatur an. Im Gegensatz dazu herrscht im Innern des Fahrzeugreifens unter bestimmten Bedingungen eine andere Temperatur als die Umgebungstemperatur, nämlich dann, wenn diese während der Fahrt auch durch den Einfluß der Walkarbeit des Reifens bestimmt ist.

Die Reifendruck-Überwachungseinrichtung (5) verfügt im weiteren über ein Gehäuse (9), einen mit einer Feder (12) belasteten Kolben (10) und zur Bestimmung der Vorspannung der Feder (12) einen Federteller (13) und ein Distanzstück (14). Das Distanzstück (14) stützt sich an der oberen Innenkante des Gehäuses (9) ab und verschiebt unter bestimmten Bedingungen den Federteller (13) in Richtung des Kolbens (10), der Federteller (13) überträgt diese Verschiebung auf die Feder (12), die dadurch vorgespannt wird. Im Zusammenwirken mit den Abmessungen der anderen beteiligten Mechanik-Komponenten wird die Vorspannung der Feder (12) mit Vorrang durch die Länge des Distanzstücks (14) bestimmt.

Der Kolben (10) ist an seiner Unterkante zur Druckkammer (6) mit einem Schaltstößel (11) verbunden, der an seinem oberen Ende einen zylindrischen Ansatz (16) aufweist. Der Schaltstößel (11) ist in der Lage, einen mit einer Rückholfeder (19) belasteten elektrischen Umschalter (18) zu betätigen, welcher einen ersten Kontakt (20), einen zweiten Kontakt (21) und einen dritten Kontakt (22) aufweist (die Kontakte (21, 22) sind federnd dargestellt um anzudeuten, daß trotz der unvermeidlichen Anschlagtoleranzen keine mechanische Überbestimmung vorliegt).

Der mit der Feder (12) belastete Kolben (10) wirkt als Druckmeßglied für den in der Druckkammer (6) vorliegenden Druck, welcher, wie oben erläutert, den im Reifen (2) herrschenden Reifendruck darstellt. Von seiten der Druckkammer wirkt auf den Kolben (10) eine Kraft ein (Druckkraft), die sich aus dem Produkt von dem Reifendruck und der wirksamen Fläche des Kolbens (10) ergibt, und von der der Druckkammer (6) abgewandten Seite wirkt auf den Kolben (10) die Kraft der Feder (12) ein (Federkraft), welche proportional zu ihrer Eindrückung ist.

Der Kolben (10) bewegt sich in Richtung einer Gleichgewichtsstellung, d. h. einer Stellung, in der sich die gegensinnig wirkenden Kräfte, die Druckkraft und die Federkraft, einander aufheben. Die Position des Kolbens in der Gleichgewichtsstellung ist ein Maß für den Reifendruck.

Der Weg des Kolbens (10) wird zu der der Druckkammer (6) abgewandten Seite durch einen Anschlag (15) begrenzt. Der Anschlag (15) bewirkt, daß der Kolben (10) zwei Schaltstellungen, eine erste oder eine zweite Schaltstellung, einnimmt und die Position des Kolbens in einer der beiden Schaltstellungen zur Auswertung des Reifendrucks benutzt wird.

Die erste Schaltstellung, welche auch die Normalstellung ist, wird eingenommen, wenn der Reifendruck einen Reifendruck-Grenzwert mindestens erreicht oder überschreitet: Die auf den Kolben (10) einwirkende Druckkraft überschreitet die Kraft der Feder (12), und der Kolben (10) wird durch die überwiegende Druckkraft an den Anschlag (15) angelegt. In Fig. 2 ist der Kolben (10) in dieser seiner Normalstellung dargestellt.

Bei Unterschreitung des Reifendruck-Grenzwertes wird die zweite Schaltstellung des Kolbens (10), die Warnstellung, eingenommen. Die Federkraft überschreitet die Druckkraft, und der Kolben (10) wird in Richtung eines Bodens (17) der Druckkammer (6) bewegt, bis die Unterkante des zylindrischen Ansatzes (16) am Boden (17) der Druckkammer (6) anliegt.

Die Auswertung der Schaltstellungen des Kolbens (10) erfolgt durch den Schaltstößel (11) und den Umschalter (18). In der Normalstellung ist der erste Kontakt (20) mit dem zweiten Kontakt (21) verbunden. In dieser Stellung liegt ein ausreichender Reifendruck vor, so daß kein Warnsignal ausgegeben wird.

In der Warnstellung ist der erste Kontakt (20) mit dem dritten Kontakt (22) verbunden: In dieser Stellung wird in nicht dargestellter Weise ein Warnsignal ausgegeben.

Wie oben bereits angedeutet, bestimmt die Länge des Distanzstücks (14) zusammen mit den Eigenschaften der Feder (12) und den Abmessungen des Federtellers (13) die Vorspannung der Feder und legt damit den Reifendruck-Grenzwert fest. Der Reifendruck wird nach den unten erläuterten Prinzipien temperaturabhängig korrigiert, indem der Reifendruck-Grenzwert temperaturabhängig verändert wird. Das Distanzstück (14) stellt nämlich kein Bauteil mit fester Länge dar, sondern wird zum Beispiel durch ein Dehnstoff-Arbeitselement gebildet, welches seine Länge und damit auch den Reifendruck-Grenzwert in Abhängigkeit von der Umgebungstemperatur verändert.

Unter dem Begriff "Dehnstoff-Arbeitselement" wird ein Begriff gleichen Namens verstanden, wie er in der EP-A1-0 423 462 als Element (Prospekt BTH-361-6060-2000 MÜ der Fa. Behr-Thomson), dessen Ausdehnungscharakteristik in Abhängigkeit von der Temperatur entweder linear oder nichtlinear wählbar ist, als Stellgröße zum Verstellen des Schaltschwellenwertes vorgeschlagen wird, wobei die Verstellung mit zunehmender Temperatur geringer oder stärker wirkend ausgebildet sein kann.

Für das Distanzstück (14) in Form des Dehnstoff-Arbeitselementes wird eine bestimmte, insgesamt nichtlineare Ausdehnungscharakteristik gewählt, und es werden, wie in Fig. 3 dargestellt, drei charakteristische Bereiche für die Umgebungstemperatur festgelegt.

Ein erster Bereich für tiefe Umgebungstemperaturen (unterer Temperaturbereich) erstreckt sich von beliebig tiefen Temperaturen bis zu einer unteren Temperaturschwelle $T_1=0°C$; in diesem Bereich verändert sich die Länge des Distanzstücks (14) nicht, sie ist gleich der Grundbaulänge des Distanzstücks [in Fig. 3 ist auf der Ordinate die Längenänderung gegenüber der Grundbaulänge eingezeichnet, wobei die Grundbaulänge hier so definiert wird, daß sie bei negativen Temperaturen gegeben ist]. Für diesen Temperaturbereich ist die Längenänderung des Distanzstücks (14) gleich 0. Die Grundbaulänge kann aufgrund der Anwendung frei gewählt werden; üblicherweise liegt sie zwischen 20 und 50 mm.

Ein zweiter Bereich für mittlere Umgebungstemperaturen (mittlerer Temperaturbereich) reicht von der unteren Temperaturschwelle $T_1$ bis zu einer oberen Temperaturschwelle $T_2=30°C$. In diesem Bereich steigt die Baulänge des Distanzstücks, ausgehend von der Grundbaulänge linear mit der Temperatur an. In Fig. 3 wird in diesem Bereich die Längenänderung durch ein Geradenstück dargestellt. Die Längenänderung im mittleren Temperaturbereich von 0 °C bis 30 °C beträgt typisch einige Millimeter, z. B. 7 mm.

Ein dritter Bereich für hohe Temperaturen (oberer Temperaturbereich) beginnt bei der oberen Temperaturschwelle $T_2$ und reicht bis zu beliebig hohen Temperaturen. In diesem Bereich findet keine oder nur eine vergleichsweise geringfügige Längenänderung mit der Temperatur statt. In Fig. 3 wird dieser Bereich durch ein durchgezogenes Geradenstück parallel zur Temperaturachse dargestellt (der Fall der geringfügigen Längenänderung ist mit einer gestrichelten Linie angedeutet); die Länge des Distanzstücks (14) ist in diesem Bereich gleich der Länge, die das Distanzstück an der oberen Temperaturschwelle $T_2$ eingenommen hat.

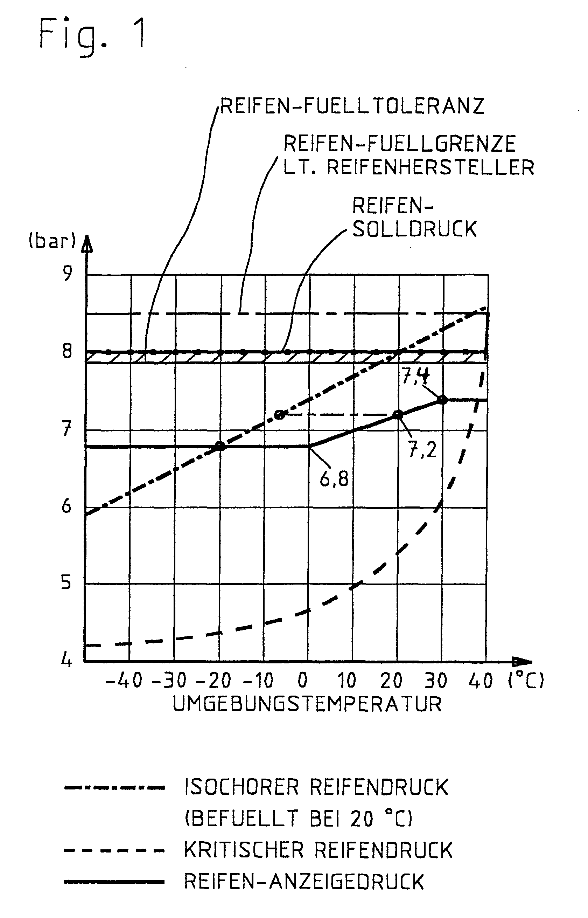

Bei Einbau des Dehnstoff-Arbeitselementes mit einer Änderungscharakteristik nach Fig. 3 in die unter Fig. 2 beschriebene Reifendruck-Überwachungseinrichtung erhält man bei geeigneter Dimensionierung der anderen Bauteile den in Fig. 1 dargestellten Anzeigedruck; der Anzeigedruck stellt den Reifendruck-Grenzwert als Funktion von der Umgebungstemperatur dar.

Der Anzeigedruck ist insgesamt eine bestimmte nichtlineare Funktion, wobei der Verlauf in den obengenannten Temperaturbereichen durch stückweise Linearisierung gebildet wird. Im unteren Temperaturbereich ist der Anzeigedruck gleich einem Festwert von 6,8 bar, während im oberen Temperaturbereich der Anzeigedruck konstant 7,4 bar ist. Im mittleren Bereich entspricht der Anzeigedruck einer geraden Strecke, die durch die zwei Punkte 6,8 bar an der unteren Temperaturschwelle $T_1$ und 7,4 bar an der oberen Temperaturschwelle $T_2$ definiert ist. Diese Strecke schneidet die Senkrechte der Umgebungstemperatur von +20 °C bei einem Druck von 7,2 bar. Bei einer Umgebungstemperatur von 20 °C (einer Temperatur, die im langfristigen Mittel als "typisch" angenommen werden kann) ergibt sich damit ein Anzeigedruck von 7,2 bar.

Die Funktion des Anzeigedrucks über der Umgebungstemperatur erfüllt verschiedene Forderungen, wie sie an die Überwachung eines Fahrzeugreifens für Nutzfahrzeuge gestellt werden, sie werden im folgenden erläutert.

Bei der Überwachung eines Reifendrucks muß sichergestellt sein, daß einerseits echte Lecks sicher erkannt werden, daß aber andererseits kein Fehlansprechen der Überwachungseinrichtung aufgrund üblicher Schwankungen des Reifendrucks auftritt.

Für Nutzfahrzeug-Reifen wird von dem Reifenhersteller zum Beispiel ein Reifen-Solldruck von 8 bar vorgegeben, der für alle Umgebungstemperaturen gilt. Wenn der Reifendruck kleiner ist als der Solldruck, so ist durch die Differenz zum Solldruck ein Minderdruck gegeben. Ein Minderdruck, der zum Ansprechen der Überwachungseinrichtung führt, wird hier als Ansprech-Minderdruck bezeichnet.

Der Ansprech-Minderdruck ist im unteren Temperaturbereich am größten und beträgt konstant 1,2 bar. Der Maximalwert des Ansprech-Minderdrucks ist somit $\Delta p_{max}=1,2$ bar.

Im mittleren Temperaturbereich verringert er sich linear mit der Temperatur zwischen dem an seiner unteren Grenze gegebenen Druck von 1,2 bar und einem Druck von 0,6 bar an seiner oberen Grenze.

Für den oberen Temperaturbereich liegt mit einem konstanten Druck von 0,6 bar der kleinste Ansprech-Minderdruck vor. Damit ist der Minimalwert des Ansprechdrucks $\Delta p_{min}=0,6$ bar.

Neben dem Reifen-Solldruck wird auch eine Drucktoleranz von zum Beispiel -0,2 bar spezifiziert, weshalb für einen Nutzfahrzeug-Reifen eine Reifen-Fülltoleranz vorliegt, die von 7,8 bis 8 bar reicht; die Reifen-Füllgrenze, d. h. der vom Hersteller angegebene maximale Reifendruck beim Füllen wird mit 8,5 bar angenommen.

Als Sicherheit gegen Fehlansprechen ist der Sicherheitsabstand zwischen der Reifen-Fülltoleranz (hier ist der untere Wert des Toleranzbandes gemeint) und dem Anzeigedruck von Bedeutung. Durch die Toleranz von betragsmäßig 0,2 bar ist der Sicherheitsabstand um jeweils 0,2 bar kleiner als der erläuterte Ansprech-Minderdruck. Der Sicherheitsabstand sollte für alle Temperaturbereiche groß genug sein, um ein Fehlansprechen zu verhindern.

Im oberen Temperaturbereich, dem aufgrund des kleinsten Ansprech-Minderdrucks empfindlichsten Bereich beträgt der Sicherheitsabstand 0,4 bar, was ausreichend ist, um ein Fehlansprechen zu vermeiden.

Die Erfindung legt den Schwerpunkt der Warnung auf die Situation bei Fahrtantritt; dem Fahrer wird ein Warnsignal übermittelt, wenn der Reifendruck unter dem Anzeigedruck liegt.

Wird dem Fahrer bei Fahrtantritt kein Warnsignal übermittelt, so kann er bis auf weiteres davon ausgehen, daß ein ausreichender Reifendruck vorliegt, dieser ist mindestens gleich dem oder größer als der Anzeigedruck. Während der Fahrt erhöht sich aufgrund der Walkarbeit dann die Temperatur im Innern des Reifens, und mit dieser Temperaturerhöhung steigt der Reifendruck ebenfalls an. Diese walkarbeitsbedingte Reifendruckerhöhung ist bei den relativ steifen Nutzfahrzeugreifen zwar erheblich geringer als bei vergleichsweise elastischen Pkw-Reifen, sie bewegt sich bei Nutzfahrzeugreifen aber auch in der Größenordnung von einigen Zehntel bar (z. B. +0,5 bar). Um ein Leck anzuzeigen, muß also der Reifendruck, der bei Fahrtantritt schon an oder über dem Anzeigedruck lag, um den Betrag der walkarbeitsbedingten Druckerhöhung zusätzlich abfallen (also z. B. um zusätzliche 0,5 bar), um ein Warnsignal anzuzeigen. Ein Druckabfall in dieser Größenordnung tritt nur auf, wenn ein erhebliches Leck vorliegt. Nur bei solchen Lecks soll der Fahrer während der Fahrt gewarnt werden; kleine Lecks werden durch die walkarbeitsbedingte Druckerhöhung dagegen nicht angezeigt: Diese Lecks kommen dann gegebenenfalls nach einer Betriebspause vor dem nächsten Fahrtantritt zur Anzeige.

Die Walkarbeit eines Reifens hängt neben anderen Einflußgrößen wie den Reifendimensionen und der Belastung des Reifens signifikant vom Reifendruck ab. Herrscht im Reifen ein Minderdruck, so ist eine größere Walkarbeit gegeben, und mit der größeren Walkarbeit vergrößert sich auch die Reifenerwärmung. Bei großen Minderdrücken kommt es zu hohen Temperaturen, und wenn die Reifentemperatur dann einen Wert von etwa 110 °C erreicht, kann es sogar zu einer Vorschädigung des Reifens kommen. Ab dieser Temperatur kann sich nämlich im Walkzonenbereich, vorwiegend am Felgenbett, schon das Gummi von den Stahl-Stützelementen lösen.

Eine derartige Vorschädigung ist einem Reifen äußerlich nicht anzusehen. Beim weiteren Betrieb eines solchen Reifens muß bei einem eventuell neu auftretenden Minderdruck mit spontanen Schäden, wie z. B. einem Reifenplatzen, gerechnet werden. Reifen-Vorschädigungen sind daher nach Möglichkeit auszuschließen.

Um Reifen-Vorschädigungen zu vermeiden, wird der sogenannte "kritische Reifendruck" bei der Dimensionierung des Anzeigedrucks mitberücksichtigt; er ist in Fig. 1 dargestellt (gestrichelte Linie).

Der hier dargestellte "kritische Reifendruck" eines Reifens ist derjenige Druck, bei dem sich während der Fahrt (unter "Fahrt" wird eine Versuchsfahrt unter der bestimmten Bedingung eines beladenen Fahrzeugs bei einer Geschwindigkeit von 80 km/h verstanden) die o. g. Vorschädigungs-Temperatur von 110 °C einstellt. Entsprechend Fig. 1 liegt bei tiefen Umgebungstemperaturen der kritische Reifendruck in der Nähe von 4 bar; er steigt in Richtung höherer Temperaturen zuerst leicht und später sehr stark an, um dann in der Nähe von einer Umgebungstemperatur von 40 °C sogar den Reifen-Solldruck von 8 bar zu überschreiten. Obwohl unter bestimmten Bedingungen ermittelt, hat diese Charakteristik einen allgemeinen Aussagewert für einen Nutzfahrzeugreifen.

Für die Bedingung, eine Reifen-Vorschädigung nach Möglichkeit zu unterbinden, muß der Reifen-Anzeigedruck so ausgelegt sein, daß er oberhalb des kritischen Reifendrucks verläuft. Dies ist, wie in Fig. 1 dargestellt, bis zu einer Umgebungstemperatur von 35 °C sicher erfüllt; im Bereich von um und über 40 °C ist diese Forderung durch den sehr starken Gradienten des kritischen Reifendrucks über der Umgebungstemperatur grundsätzlich nicht mehr erfüllbar. Diesem Umstand wäre nur durch eine Erhöhung des Reifen-Solldrucks zu begegnen, was aber aufgrund der Füllgrenze problematisch ist. Im Rahmen des Möglichen wird dem Umstand durch die Verringerung des Ansprech-Minderdrucks für den oberen Temperaturbereich auf 0,6 bar Rechnung getragen.

Bei Betriebspausen nimmt der Fahrzeugreifen allmählich die Umgebungstemperatur an. Nach Ausgleich der Temperaturunterschiede aus einer vorausgegangenen Fahrt stellt sich ein Reifendruck ein, der dem isochoren Druckverlauf über der Umgebungstemperatur entspricht. Die Funktion des Druckverlaufs hängt von dem Druck und der Umgebungstemperatur bei der Befüllung des Reifens ab. In Fig. 1 ist der Verlauf des isochoren Reifendrucks über der Umgebungstemperatur für den Fall dargestellt, daß der Reifen bei einer Umgebungstemperatur von 20 °C mit dem Reifen-Solldruck von 8 bar befüllt worden ist (strich-punktierte Linie). Entsprechend den Gasgleichungen ist der isochore Reifendruck $p_I$ in Abhängigkeit von der Umgebungstemperatur $t_U$ für die genannte Reifen-Füllsituation durch die Formel

$$p_I = \frac{273° + t_U[°C]}{293°} \cdot 9\text{bar} - 1\text{bar}$$

gegeben.

Unterschreitet die Umgebungstemperatur diejenige Temperatur, die beim Befüllen vorhanden war (im vorliegenden Beispiel ist dies die Umgebungstemperatur von 20 °C), so stellt sich ein isochorer Reifendruck ein, der geringer ist als der Reifendruck beim Befüllen. Dieser Minderdruck wird als kältebedingter Minderdruck bezeichnet, da er auf eine kältere Umgebungstemperatur zurückzuführen ist.

In Fig. 1 unterschreitet der isochore Reifendruck den Anzeigedruck bei einer Umgebungstemperatur von -20 °C. Dies zeigt, daß auch ein kältebedingter Minderdruck zu einer Warnanzeige führt. Allerdings ist die Ansprechempfindlichkeit für diesen Fall bewußt reduziert, so daß die Umgebungstemperatur ganz außerordentlich absinken muß, um eine Warnung auszulösen.

Würde man sich bei diesen Warnungen buchstabengetreu an die Füllvorschriften klammern, so müßten schon kleine kältebedingte Minderdrücke angezeigt werden. Eine Anzeige solch kleiner Abweichungen wäre jedoch praxisfremd und zudem gefährlich. Weil gerade einem Fahrer bewußt ist, daß kleine Abweichungen keinerlei Gefährdungen darstellen, muß er sich durch häufige Anzeigen kleiner Abweichungen zu Recht belästigt fühlen, und er würde als Folge Warnanzeigen grundsätzlich nicht mehr ernst nehmen. Die Funktion des Anzeigedrucks ist daher bewußt so gewählt, daß nur erhebliche kältebedingte Minderdrücke angezeigt werden, die ein Nachfüllen des Reifens wirklich erforderlich machen.

Eine nominelle Verschlechterung der Überwachungseinrichtung durch die verringerte Ansprechempfindlichkeit bei tiefen Temperaturen spielt deshalb keine Rolle, da bei tiefen Temperaturen der kritische Reifendruck ebenfalls sehr klein ist und dadurch keine Gefährdung des Reifens entsteht.

Dadurch kann man sich bei der Anzeige von kältebedingten Minderdrücken auf Fälle erheblicher Minderdrücke beschränken.

Der gleiche Grundsatz, den Fahrer nur bei wirklicher Erfordernis zu warnen, gilt, wie oben angedeutet, auch für die Situation während der Fahrt. Der Anzeigedruck wird unterschritten, wenn, wie oben erläutert, entweder ein erheblicher kältebedingter Minderdruck vorherrscht oder wenn ein erhebliches Leck auftritt, das den Reifendruck unter den Anzeigedruck abfallen läßt. Natürlich führt auch eine Kombination von kältebedingtem Minderdruck und Leck gegebenenfalls zu einer Warnung; in diesem Fall können die Einflüsse des kältebedingten Minderdruckes oder des Lecks als solche geringer sein: Es wird ein Warnsignal ausgelöst, wenn sich durch die summierende Wirkung beider Effekte ein Reifendruck unterhalb des Anzeigedrucks einstellt.

Im beschriebenen Ausführungsbeispiel ist die Funktion des Anzeigedrucks über der Umgebungstemperatur durch vier Kenngrößen festgelegt. Diese Kenngrößen sind einmal die zwei Temperaturschwellen ($T_1$=0°C und $T_2$ =30°C) mit Hilfe derer die drei Temperaturbereiche festgelegt sind und zum anderen der maximale Ansprech-Minderdruck im unteren und der minimale Ansprech-Minderdruck im oberen Temperaturbereich ($\Delta p_{max}$=1,2 bar bzw. $\Delta p_{min}$=0,6 bar). Diese Kenngrößen sind keine Werte, die von Anwendung zu Anwendung gleich sind (Festwerte), sondern sie stellen Richtwerte dar, die auf den im Ausführungsbeispiel als typisch angenommenen Reifen-Solldruck von 8 bar, die Reifen-Fülltoleranz von 7,8 bis 8 bar und die Reifen-Füllgrenze von 8,5 bar bezogen sind. Ausgehend von den hier angegebenen Kenngrößen des Beispiels werden die Kenngrößen für eine bestimmte Anwendung individuell festgelegt, indem man für diese Anwendung die vorstehenden Dimensionierungs-Überlegungen durchführt. Ganz besonders werden sich andere Kennwerte ergeben, wenn man einen anderen Reifen-Solldruck, eine andere Reifen-Fülltoleranz oder eine andere Reifen-Füllgrenze zugrunde legt.

In der möglichen Abfolge einer Dimensionierungs-Bestimmung werden in einem ersten Schritt die Temperaturschwellen $T_1$ und $T_2$ festgelegt. In einem zweiten Schritt werden die Werte für den minimalen und maximalen Ansprech-Minderdruck $\Delta p_{min}$ bzw. $\Delta p_{max}$ bestimmt. Aus den Festlegungen des ersten und zweiten Schrittes ergibt sich als dritter Schritt die Funktion des Anzeigedrucks über der Umgebungstemperatur. Mit der Kenntnis dieser Funktion werden in einem vierten Schritt die Ausdehnungscharakteristik des Distanzstücks (14) in Form des Dehnstoff-Arbeitselementes bestimmt. Im Anschluß daran lassen sich alle Bauteile der Überwachungseinrichtung mit üblichen fachmännischen Überlegungen dimensionieren.

Für einen Anzeigedruck lassen sich auch mehr als drei Temperaturbereiche vorsehen, was dadurch geschieht, indem man mehrere (d. h. mehr als eines) Dehnstoff-Arbeitselemente mit drei charakteristischen Bereichen derart kombiniert, daß sich der gewünschte Verlauf des Ansprechdrucks mit mehr als drei Temperaturbereichen ergibt.

Das Distanzstück (14) des Anwendungsbeispiels wird durch mehrere Arbeitselemente mit drei charakteristischen Bereichen ersetzt. Diese Arbeitselemente werden in Reihe zueinander angeordnet, so daß die Summe ihrer Längen die resultierende Länge ergibt, welche den Federteller (13) verschiebt und die Feder (12) vorspannt. Damit die Summierung der Ausdehnungscharakteristiken der einzelnen Arbeitselemente zu mehr als drei Temperaturbereichen führt, muß mindestens eine Temperaturschwelle zu zumindest einer der beiden Temperaturschwellen zumindest eines anderen Arbeitselementes einen anderen Wert aufweisen.

Einer derartigen Ausgestaltung des Ansprechdrucks mit mehr als drei Temperaturbereichen steht allerdings der erhöhte technische Aufwand gegenüber.

Bezugszeichenliste

(1) Rad
(2) Reifen
(3) Füllventil
(4) Druckleitung
(5) Reifendruck-Überwachungseinrichtung
(6) Druckkammer
(7) Dichtung zu Druckkammer (6)
(8) Dichtung zu Druckkammer (6)
(9) Gehäuse
(10) Kolben
(11) Schaltstößel
(12) Feder
(13) Federteller
(14) Distanzstück in Form eines Dehnstoff-Arbeitselementes
(15) Anschlag
(16) zylindrischer Ansatz am Schaltstößel (11)
(17) Boden von Druckkammer (6)
(18) elektrischer Umschalter
(19) Rückholfeder zu Umschalter (18)
(20) erster Kontakt von Umschalter (18)
(21) zweiter Kontakt von Umschalter (18)
(22) dritter Kontakt von Umschalter (18)

**Patentansprüche**

1. Einrichtung zur Reifendruck-Überwachung mit folgenden Merkmalen:

   a) Es ist ein Druckmeßglied zur Messung des im Reifen herrschenden Luftdrucks vorgesehen, welches ein Reifendruck-Signal abgibt;

   b) es ist eine Auswerteeinrichtung zur Auswertung des Reifendruck-Signals vorgesehenen;

   c) die Auswerteeinrichtung löst ein Warnsignal aus, wenn das Reifendruck-Signal einen Reifendruck-Grenzwert unterschreitet;

   d) es ist ein Korrekturglied vorgesehen, welches das Reifendruck-Signal temperaturabhängig korrigiert;

   e) das Korrekturglied ist der außerhalb des Reifens herrschenden Temperatur ausgesetzt;

   f) der Reifendruck-Grenzwert wird in Form eines Anzeigedrucks festgelegt, welcher eine Funktion der außerhalb des Reifens herrschenden Temperatur ist;
   **dadurch gekennzeichnet daß**

   g) diese Funktion eine nichtlineare Funktion darstellt.

2. Einrichtung nach Anspruch 1, **gekennzeichnet durch** die folgenden Merkmale:

   a) das Korrekturglied besteht aus einem Element, dessen Länge sich in Abhängigkeit von der Temperatur verändert;
   b) die Länge des Elementes dient als Korrekturgröße.

3. Einrichtung nach Anspruch 2, **gekennzeichnet durch** die folgenden Merkmale:

   a) die nichtlineare Funktion ist derart festgelegt, daß die außerhalb des Reifens herrschende Temperatur in mindestens drei Bereiche unterteilt wird;
   b) innerhalb der Bereiche wird der Anzeigedruck **durch** stückweise Linearisierung gebildet.

4. Einrichtung nach Anspruch 3, **gekennzeichnet durch** die folgenden Merkmale:

   a) es sind drei Bereiche vorgesehen, nämlich ein Bereich für tiefe Temperaturen, ein Bereich für mittlere Temperaturen und ein Bereich für hohe Temperaturen;

   b) der Bereich für tiefe Temperaturen ist derart definiert, daß er für alle Temperaturen kleiner oder gleich einer unteren Temperaturschwelle $T_1$ gilt;

   c) der Bereich für mittlere Temperaturen ist derart definiert, daß er für Temperaturen zwischen der unteren Temperaturschwelle $T_1$ und einer oberen Temperaturschwelle $T_2$ gilt;

   d) der Bereich für hohe Temperaturen ist derart definiert, daß er für alle Temperaturen größer oder gleich der oberen Temperaturschwelle $T_2$ gilt.

5. Einrichtung nach Anspruch 4, **dadurch gekennzeichnet, daß** die untere Temperaturschwelle $T_1$ gleich einer Temperatur von 0 °C ist.

6. Einrichtung nach Anspruch 4 oder 5, **dadurch gekennzeichnet, daß** die obere Temperaturschwelle $T_2$ gleich einer Temperatur von +30 °C ist.

7. Einrichtung nach Anspruch 4 oder 5 oder 6, **gekennzeichnet durch** die folgenden Merkmale:

a) für den Bereich tiefer Temperaturen wird der Anzeigedruck aus einem Geradenabschnitt gebildet, welcher unterhalb einer dem Sollwert der Füllvorschrift entsprechenden Füllinie in einem Abstand des maximalen Ansprech-Minderdrucks $\Delta p_{max}$ zur Füllinie und parallel zu ihr verläuft, wobei der Geradenabschnitt bei der unteren Temperaturschwelle $T_1$ beginnt und sich in Richtung negativ unendlich der Temperaturachse erstreckt;

b) für den Bereich hoher Temperaturen wird der Anzeigedruck aus einem Geradenabschnitt gebildet, welcher unterhalb der Füllinie in einem Abstand des minimalen Ansprech-Minderdrucks $\Delta p_{min}$ zur Füllinie und parallel zu ihr verläuft, wobei der Geradenabschnitt bei der oberen Temperaturschwelle $T_2$ beginnt und sich in Richtung positiv unendlich der Temperaturachse erstreckt;

c) für den Bereich mittlerer Temperaturen wird der Anzeigedruck aus einer geraden Strecke gebildet, welche am Beginn des Geradenabschnitts für den Bereich tiefer Temperaturen an der Temperaturschwelle $T_1$ beginnt und sich zum Beginn des Geradenabschnitts für hohe Temperaturen an der Temperaturschwelle $T_2$ erstreckt.

8. Einrichtung nach Anspruch 7, **dadurch gekennzeichnet, daß** der maximale Ansprech-Minderdruck $\Delta p_{max}$=1,2 bar beträgt.

9. Einrichtung nach Anspruch 7 oder 8, **dadurch gekennzeichnet, daß** der minimale Ansprech-Minderdruck $\Delta p_{min}$=0,8 bar beträgt.


**Claims**

1. Apparatus for monitoring tyre pressure, having the following features:

a) a pressure-measuring element for measuring the air pressure in the tyre is provided, which element produces a tyre pressure signal;
b) an evaluating device for evaluating the tyre pressure signal is provided;
c) the evaluating device triggers an alarm signal when the tyre pressure signal falls below a tyre pressure limit value;
d) a correction element that corrects the tyre pressure signal in dependence on temperature is provided,
e) the correction element is exposed to the temperature prevailing outside the tyre;
f) the tyre pressure limit value is defined in the form of an indicative pressure, which is a function of the temperature prevailing outside the tyre;
**characterised in that**
g) this function is a non-linear function.

2. Device according to claim 1, **characterised by** the following features:

a) the correction element consists of an element of which the length changes in dependence on the temperature;

b) the length of the element serves as correcting variable.

3. Device according to claim 2, **characterised by** the following features:

a) the non-linear function is defined in such a way that the temperature prevailing outside the tyre is subdivided into at least three bands;

b) within the bands the indicative pressure is formed by piece-wise linearisation.

4. Device according to claim 3, **characterised by** the following features:

a) three bands are provided, namely, a band for low temperatures, a band for medium temperatures and a band for high temperatures;

b) the band for low temperatures is defined such that it applies to all temperatures less than or equal to a lower temperature threshold $T_1$;

c) the band for medium temperatures is defined such that it applies to temperatures between the lower temperature threshold $T_1$ and an upper temperature threshold $T_2$;

d) the band for high temperatures is defined such that it applies to all temperatures greater than or equal to the upper temperature threshold T2.

5. Device according to claim 4, **characterised in that** the lower temperature threshold $T_1$ is equal to a temperature of 0°C.

6. Device according to claim 4 or 5, **characterised in that** the upper temperature threshold is equal to a temperature of +30°C.

7. Device according to claim 4 or 5 or 6, **characterised by** the following features:

a) for the band of low temperatures, the indicative pressure is formed from a straight-line portion that runs below a filling line corresponding to the desired value of the specified filling level at a distance of the maximum pressure-reducing response $\Delta p_{max}$ to the filling line and parallel thereto, the straight-line portion starting at the lower temperature threshold $T_1$ and extending in the direction of minus infinity on the temperature axis;

b) for the band of high temperatures, the indicative pressure is formed from a straight-line portion that runs below the filling line at a distance of the minimum pressure-reducing response $\Delta p_{min}$ to the filling line and parallel thereto, the straight-line portion starting at the upper temperature threshold $T_2$ and extending in the direction of plus infinity on the temperature axis;

c) for the band of medium temperatures, the indicative pressure is formed from a straight section that starts at the beginning of the straight-line portion for the band of low temperatures at the temperature threshold $T_1$ and extends to the beginning of the straight-line portion for high temperatures at the temperature threshold $T_2$.

8. Device according to claim 7, **characterised in that** the maximum pressure-reducing response $\Delta p_{max}$ =1.2 bar.

9. Device according to claim 7 or 8, **characterised in that** the minimum pressure-reducing response $\Delta p_{min}$ = 0.8 bar.

## Revendications

1. Appareil pour la surveillance de la pression de pneumatiques, comprenant les éléments suivants :

a) il est prévu un organe de mesure de pression pour mesurer la pression d'air régnant dans le pneumatique, qui émet un signal de pression de pneumatique ;
b) il est prévu un dispositif d'évaluation pour évaluer le signal de pression de pneumatique ;
c) le dispositif d'évaluation déclenche un signal d'avertissement si le signal de pression de pneumatique passe au-dessous d'une valeur limite de pression de pneumatique ;
d) il est prévu un organe de correction qui corrige le signal de pression de pneumatique en fonction de la température ;
e) l'organe de correction est exposé à la température régnant à l'extérieur du pneumatique ;
f) la valeur limite de pression de pneumatique est fixée sous forme d'une pression d'affichage qui est fonction de la température régnant à l'extérieur du pneumatique ;
**caractérisé en ce que**
g) cette fonction représente une fonction non linéaire.

2. Appareil selon la revendication 1, **caractérisé par** les éléments suivants :

a) l'organe de correction est constitué par un élément dont la longueur varie en fonction de la température ;
b) la longueur de l'élément sert de grandeur de correction.

3. Appareil selon la revendication 2, **caractérisé par** les éléments suivants :

a) la fonction non linéaire est fixée de telle sorte que la température régnant à l'extérieur du pneumatique est subdivisée en au moins trois zones ;
b) à l'intérieur des zones, la pression d'affichage est formée par linéarisation tronçon par tronçon.

4. Appareil selon la revendication 3, **caractérisé par** les éléments suivants :

a) il est prévu trois zones, à savoir une zone pour des températures basses, une zone pour des températures moyennes et une zone pour des températures élevées ;
b) la zone pour les températures basses est définie de manière à s'appliquer à toutes les températures inférieures ou égales à un seuil de température inférieur $T_1$ ;
c) la zone pour les températures moyennes est définie de manière à s'appliquer à des températures entre le seuil de température inférieur $T_1$ et un seuil de température supérieur $T_2$ ;
d) la zone pour les températures élevées est définie de manière à s'appliquer à toutes les températures supérieures ou égales au seuil de température supérieur $T_2$.

5. Appareil selon la revendication 4, **caractérisé en ce que** le seuil de température inférieur $T_1$ est égal à une température de 0°C.

6. Appareil selon l'une ou l'autre des revendications 4 et 5, **caractérisé en ce que** le seuil de température supérieur $T_2$ est égal à une température de +30°C.

7. Appareil selon l'une des revendications 4, 5 et 6, **caractérisé par** les éléments suivants :

a) pour la zone de températures basses, la pression d'affichage est formée par un tronçon de droite qui s'étend au-dessous d'une ligne de remplissage correspondant à la valeur de consigne de la prescription de remplissage à distance de la pression réduite de réponse maximale $\Delta p_{max}$ par rapport à la ligne de remplissage et parallèlement à celle-ci, le tronçon de droite commençant au seuil de température inférieur $T_1$ et s'étendant en direction négative infiniment suivant l'axe de température ;

b) pour la zone de températures élevées, la pression d'affichage est formée par un tronçon de droite qui s'étend au-dessous de la ligne de remplissage à distance de la pression réduite de réponse minimale $\Delta p_{min}$ par rapport à la ligne de remplissage et parallèlement à celle-ci, le tronçon de droite commençant au seuil de température supérieur $T_2$ et s'étendant en direction positive infiniment suivant l'axe de température ;

c) pour la zone des températures moyennes, la pression d'affichage est formée par un trajet rectiligne qui commence au début du tronçon de droite pour la zone des températures basses au seuil de température $T_1$ et qui s'étend jusqu'au début du tronçon de droite pour les températures élevées au seuil de température $T_2$.

8. Appareil selon la revendication 7, **caractérisé en ce que** la pression réduite de réponse maximale $\Delta p_{max}$ est égale à 1,2 bar.

9. Appareil selon l'une ou l'autre des revendications 7 et 8, **caractérisé en ce que** la pression réduite de réponse minimale $\Delta p_{min}$ est égale à 0,8 bar.

# Fig. 1

REIFEN-FUELLTOLERANZ

REIFEN-FUELLGRENZE
LT. REIFENHERSTELLER

REIFEN-
SOLLDRUCK

(bar)

9

8

7,4

7

7,2

6,8

6

5

4

-40 -30 -20 -10 0 10 20 30 40 (°C)

UMGEBUNGSTEMPERATUR

— · — · — ISOCHORER REIFENDRUCK
(BEFUELLT BEI 20 °C)

— — — — KRITISCHER REIFENDRUCK

——————— REIFEN-ANZEIGEDRUCK

# Fig. 2

# Fig. 3

Längenänderung

0    30°    Umgebungstemperatur